# EUROPEAN PATENT APPLICATION

(11) **EP 4 451 139 A1**
(43) Date of publication of application: **23.10.2024**
(21) Application number: 23315085.3
(22) Date of filing: 19.04.2023
(51) Int. Cl.: G06F 16/242

(54) **ITERATIVE SEARCH PROCESSING**

(71) Applicant: Amadeus S.A.S., 06410 Biot (FR)
(72) Inventor: CAMBERBEC, Aurelie, 06410 Biot (FR); MYTYCH, Francois-Joseph, 06410 Biot (FR); TRESCASES, Clement, 06410 Biot (FR); DUPONT, Delphine, 06410 Biot (FR); HENNION, Florian, 06410 Biot (FR)
(74) Representative: Samson & Partner Patentanwälte mbB

(57) **Abstract**

Iterative search processing is dynamically performed in an information technology system. In response to receiving a search request including search parameters, an initial search context is determined based on the search parameters. In a first search iteration, a number of first search results is determined based on the search parameters and the initial search context. The number of first search results is evaluated in order to determine an updated search context. Based on the updated search context, it is determined that at least one completion condition is not reached. In a second search iteration, a number of second search results based on the search parameters and the updated search context is determined. In response to determining that the at least one completion condition is reached, at least a subset of the first and second search results is returned.

## Description

### FIELD

The present disclosure relates to an information technology method and a system. More specifically, it relates to database search and computation technology providing search results in response to search requests.

### BACKGROUND

Existing search systems rely on pre-computed data objects, live data object in original data sources and/or dynamic data objects which are computed based on rules or machine-learning mechanisms at search request time.

Some search protocols provide for an iterative search process between a requesting client and a search platform. An example is US 2017/0344555 A1 which relates to social networking service. After a search query is generated, the generated query is shown to the searcher via a client profile search component and the searcher may have the opportunity to edit the generated query. This may include adding to or removing some attributes such as skills and companies in the query. As part of this operation, a query processor may perform a search on the query and present raw search results to the searcher via the client profile search component. These raw search results may be useful to the searcher in determining how to edit the generated query. Furthermore, the search query does not have to be limited to a single query. Often the searcher may interact with the original query and the raw search result to provide additional refinements of the original search. This applies not only to traditional text-based searches, but also to searches for ideal candidates - based on searches as well. This may be accomplished by the searcher applying additional filters and or making text-based additions to the initial ideal candidate - based on a search to refine the search results.

### SUMMARY

The present disclosure seeks to provide improvements of the existing search protocols and methodologies, in particular in the area of dynamically determining search results at search request time. The present mechanisms are set forth by the independent claims.

According to a first aspect, computer-implemented method for determining search results in a search system is presented. In response to receiving a search request including search parameters, an initial search context based on the search parameters is determined. in a first search iteration, determining a number of first search results based on the search parameters and the initial search context. The number of first search results is evaluated and an updated search context is determined based on the evaluation. It is determined that at least one completion condition is not reached. In a second search iteration, a number of second search results is determined based on the search parameters and the updated search context. In response to determining that the at least one completion condition is reached, at least a subset of the first and second search results is returned.

In some embodiments, determining that at least one completion condition is not reached is based on the updated search context and/or the number of first search results.

In some embodiments, one or more further search iterations are performed based on still updated search contexts as long as the at least one completion condition is not reached.

In some embodiments, a subsequent search iteration is based on search results of at least one previous search iteration.

In some embodiments, the initial search context and the updated search context indicates search meta information derived from one or more of the search parameters included in the search request.

In some embodiments, the completion condition is at least one of a search processing time, a maximum number of search results, and one or more search criteria fulfilled by at least a subset of the first and second search results.

In some embodiments, the one or more search criteria indicate that a parameter value of the first and second search results correspond to one of the search parameters included in the search request.

In some embodiments, the one or more search criteria indicate a degree of variation of parameter values in the first and second search results.

In some embodiments, evaluating the first search results indicates that the first search results do not comply with a predetermined returning condition, and determining the updated search context includes varying at least one of the search parameters and/or determining the number of second search results based on the at least one varied search parameter and the updated search context.

In some embodiments, the predetermined returning condition comprises a number of search results to be returned, and evaluating the first search results indicates that the number of the first search results is smaller than the number of search results to be returned.

In some embodiments, evaluating the first search results and the second search results utilizes a machine learning model.

In accordance with a second aspect, a search processing system is presented. The system includes a processor and a memory with instructions for determining search results and is arranged to perform the aforementioned functionalities.

In accordance with a third aspect, a computer program, a computer program product, and/or a non-transitory storage medium with program instructions is present. The program instructions implement the aforementioned functionalities when executed by at least one processor.

Further aspects are apparent from the subsequent description.

### BRIEF DESCRIPTION OF THE FIGURES

Aspects and examples of the present disclosure are described with reference to the following figures, in which:
FIG. 1 shows the structure of a search system.
FIG. 2 depicts the architecture of a computation engine of the search system.
FIG. 3 shows the method and communication between the components of the search system.
In FIG. 4, the method is shown as a flow diagram with n-iterations.
FIG. 5 depicts an example embodiment of the method in a server environment.
FIG. 6 illustrates an internal structure of the computation engine implementing the present functionalities.

### DETAILED DESCRIPTION

Dynamic data search processes typically involve computation-intensive retrieval, computation, preparation and post-processing of search results. Hence, computational efficiency as well as response time are relevant technical criteria for such dynamic search processes. The requests may contain open search parameters and/or values, such as starting parameter(s), minimum at least used search parameters of the object and a specific format. Hence, the number of potential search results fulfilling the search parameters in a search request can be extremely high (e.g. in the order of millions).

Against this background, dynamic search processes also attend to optimize the search results to be actually returned to a requesting client, which may e.g. comprise reducing the number of search results to a reasonable lower number (e.g. in the order of tens or hundreds), improving the relevancy of individual products (such as offers) based on individual search results, ensuring coherence of a global/overall product (such as a global offer set) corresponding to all search results, or the like. A further aspect are technical resources available to a search engine or search system which are to be utilized for performing dynamic search processes. These resources may include e.g. memory, processing resources such as processor time, network bandwidth, etc. The resources for a search process may be static (e.g. the same amount of resources for any search process) or dynamic, e.g. depending on the current load of the search engine.

Hence, a search engine is sought that is able to fine-tune dynamic search processes in order to render search processes more efficient (in terms of utilization of computation resources) and promote identification of relevant search results which correspond to search parameters of the search request.

The present disclosure tackles this technical problem by way of evaluating search input parameters in order to optimize the search process and to identify and compute search results from different databases which comply with the search request. The search engine may take additional information relating to the search input parameters and intermediate search process states into account to further fine-tune the search process. Evaluating of search results and analysis of search process state-related information may be facilitated by machine learning technology.

Generally, the search engine applies an autonomous iterative search process. In response to receiving a search request, at least two search iterations are performed without any intermediate back-and-forth with the requesting client. Each of the search iterations yields a number of search results. After each search iteration, the search engine decides whether or not to continue the search process by way of executing a further search iteration. Generally, each search iteration seeks for further or other search results because the search results obtained by the previous search iteration(s) are not yet considered to sufficiently correspond with requirements derived from the search request, or technical resources or technical constraints of the search engine are exhausted and the search process is to be aborted.

Any subsequent search iteration incrementally builds on top of the one or more previous search iterations. As explained further below, the search engine evaluates the currently identified or collected search results for any search fine-tuning options. For example, the search engine may determine that the search results obtained from the previous search iteration(s) do no yet fulfill a heterogeneity criterion, i.e. the search results are all relatively similar to each other. Hence, the search engine may decide to perform a further search iteration with adapted (e.g. refined or varied) search parameters specifically looking for further search results which are dissimilar from the previously retrieved search results, but still match the search parameters in the search request. The results of the evaluation and adapted (e.g. refined or varied) search parameters for executing a further search iteration is referred to as updated search context hereinafter.

The first iteration of the search process may be performed in a standard way on the basis of the search parameters in the search request. Hence, in the simplest version of the first iteration, an initial search context is given by the search parameters in the search request. In some embodiments, the first iteration already may be fine-tuned based on the search parameters in the search request. For example, the particular combination of search parameters in the search request may provide an indication of any type of or requirements behind the search request. For example, the particular combination of search parameters may correspond to a certain search profile which is accessible to the search engine. The profile may indicate an initial search context for the first search iteration, such as weights of the various search parameters which indicate a priority or importance. As a result, the first iteration may focus on the higher weighted search parameters while de-prioritizing lower weighted search parameters, for example.

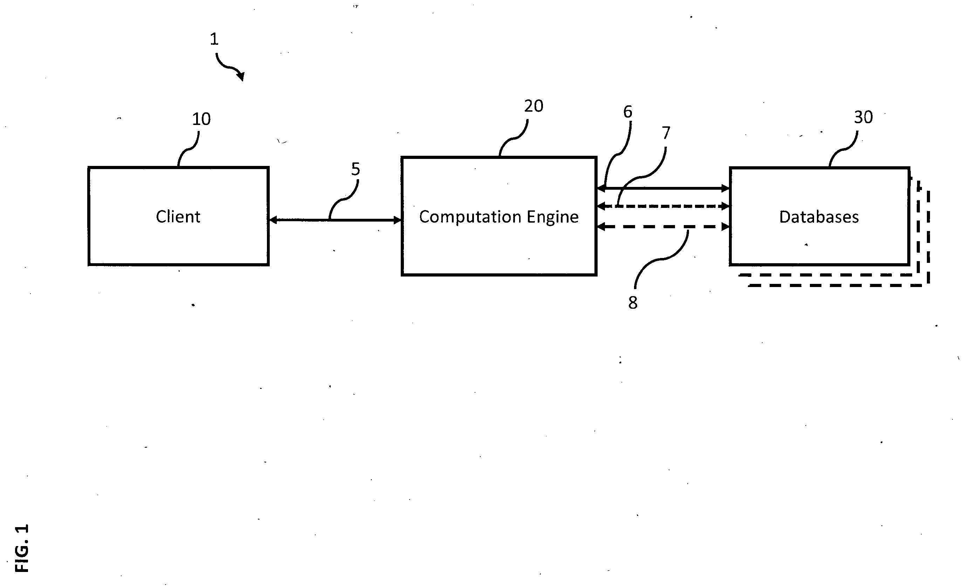

An illustration of a structure of a search system according to the present methodologies is shown in FIG. 1. The search system 1 equipped with the functionalities and capable of executing the methods described herein comprises at least a client 10, a computation engine 20 and at least one database 30. The client 10 is communicatively coupled to the computation engine 20 via an interface 5. The interface may, for example, utilize a wide area network including the Internet and/or a mobile communications network according to 2G/3G/4G/5G standards and/or a WiFi/WLAN network according to IEEE specifications.

The client 10 is a stationary or mobile computerized user device, for example an Information Technology (IT) device composed of hardware and/or software. Non-limiting examples of the client 10 are a personal computer, a laptop, a mobile station, a server, or the like equipped with software components to generate and send search requests to the computation engine 20 over the interface 5. The search requests include search parameters defining the search request. The client 10 is also capable of receiving search responses including search results of one or more searches done by the computation engine 20.

The computation engine 20 is located between the client 10 and the database(s) 30 to manage and process the search request from the client and to initiate the search in the databases 30. The computation engine 20 is connected to at least one database, and is arranged to send requests to different databases 30 over respective interfaces 6, 7, 8. The computation engine 20 may comprise a server with one or more processors and a memory including RAM and/or any further volatile memory. The memory may store temporary program data to facilitate the functionality of the computation engine 20. In some embodiment, the computation engine 20 may represent a central/centralized processing entity (which may also be referred to as data science entity) which may be configured to handle (search requests of/from) a plurality of clients 10.

The databases 30 store data which can be retrieved by the computation engine 20. The data in the databases 30 may constitute search results identified by and/or including the search parameters in the search request. Additionally or alternatively, the data may form underlying data enabling a computation of search results according to the search parameters in the search request. The data in the databases 30 may also form raw data which is still to be processed and transformed by the computation engine 20 into search results. In this respect, the databases 30 may be of different purposes, e.g. one database 30 may hold underlying computation data such as rules, availability, inventory data, etc., another database 30 may hold raw data to be postprocessed such as detailed data (while the search request may ask for aggregated data), and still another database 30 may hold data which forms an entirety or portions of search results. The databases 30 may be separate or coupled to each other in case the information of a data piece is dependent on another data piece. Independently, any database 30 may be reached with a different request and any database may then respond with a response over a respective one of the interfaces 6, 7, 8.

In response to receiving a search request including search parameters, the computation engine 20 determines an initial search context based on the search parameters. In this first search iteration, the computation engine 20 determines (e.g. dynamically computes) a number of first search results based on the search parameters and the initial search context. The number of first search results is evaluated and an updated search context is determined based on the evaluation. The search is continued with a second search iteration based on the search parameters and the updated search context if at least one completion condition is not yet reached. In the second search iteration, the computation engine 20 determines a number of second search results based on the search parameters and the updated search context. The computation engine 20 evaluates the number of second search results. In response to determining that the at least one completion condition is reached, the computation engine 20 returns at least a subset of the first and second search results back to the client 10. Herein, a search iteration is or comprises an operation or procedure of handling/processing a search operation (based on a search request from the client 10) between the computation engine 20 and all databases 30 once. That is, each database 30 is involved once in one search iteration or, stated in other words, a search iteration results in one-time retrieval of search results from (each of) the databases 30.

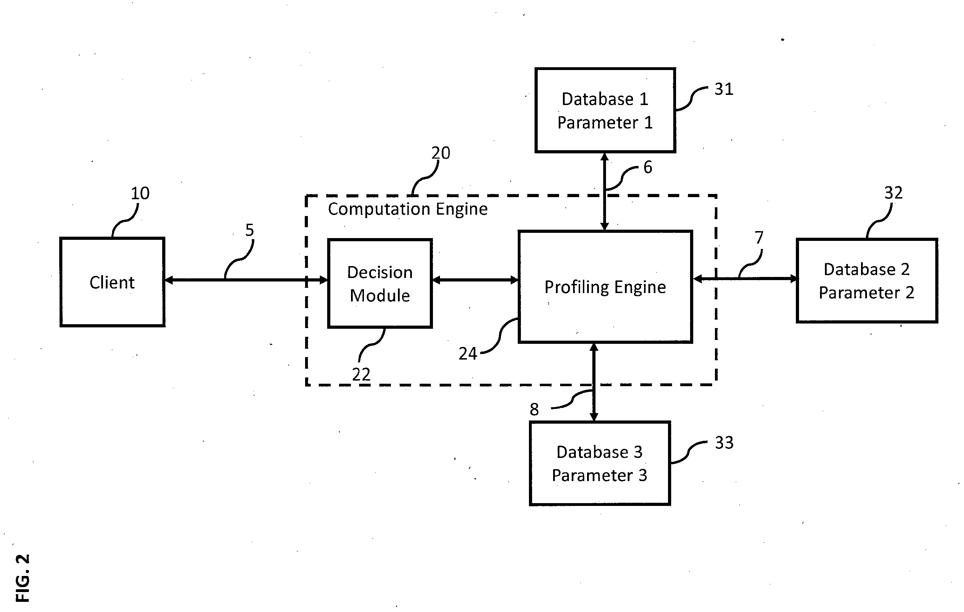

For further illustration, the architecture of the search system 1 is visualized with finer granularity of the computation engine 20 in FIG. 2. More specifically, FIG. 2 visualizes the architecture of a computation engine of the search system. The aforementioned functionality of the computation engine 20 is distributed internally to two functional modules, namely a decision module 22 and a profiling engine 24. The main functionality of the decision module 22 is to set up directions and determine conditions for the individual search iterations including the decision whether or not to continue the search process with a further search iteration or to terminate the search process and return search results to the client 10. The main functionality of the profiling engine 24 is to analyze the search parameters in the search request and any available intermediate search results and to provide a search context as a decision-making basis to the decision module 22.

With reference to FIG. 2, the client 10 is communicatively coupled to the computation engine 20 or more precisely to the decision module 22 of the computation engine 20. The profiling engine 24 and the decision module 22 form a part of the computation engine 20, wherein the decision module 20 is arranged to decide whether the search request from the client 10 is completely and sufficiently processed given the search results found so far by the search process or if the search request process is still determined to be incomplete and is to be continued with varied, additional or less search parameters. The decision module 22 receives and processes search requests and search results and decides, based on the available information, if the search process for a given search request is finished or if the search process is to be continued.

In some embodiment, the profiling engine 24 may represent a central/centralized processing entity (which may also be referred to as data science entity) which may be configured to handle (search requests of/from or search operations on/for) a plurality of clients 10 and/or a plurality of decision modules 22. In some embodiments, the decision module 22 may be configured to execute profiling engine recommendations according to a query/transaction situation at a given point in time. Accordingly, in some embodiments, the decision module 22 may be considered as a link between the profiling engine 24 and computation components, such as one or more processors, the one or more databases, or the like.

As mentioned above, a functionality of the profiling engine 24 is the determination of search context based on the search parameters in the search request. As mentioned above, search context refers to information constituting any background information derived from information conveyed by the search request. The search context is utilized to define search objectives per search iteration, supplementing, changing and/or broadening the search parameters in the search request. Evaluation of search results received or computed during a search iteration may cause an update of the search context. Insofar, the updated search context may be regarded as (a part of) an evaluation result. The updated search context and/or the search results received or computed during the search iteration may be used to decide (determine) whether the iterative search is to be concluded with the current search iteration or to be continued by a further search iteration. The search context update is e.g. performed by the profiling engine 24. The updated search context again forms the basis for deriving search objectives if still a further search iteration is performed. As shown in FIG. 2, each database 31, 32, 33 can be configured to handle (a search operation on/for) one or more specific search parameters, wherein in the visualized example database 31 is dedicated for a first search parameter, database 32 is dedicated for a second search parameter and database 33 is dedicated for a third search parameter.

The received search results from the databases 30 in the current iteration are used by the decision module 22 for evaluating whether or not a further search iteration is to be performed. For example, if the client 10 has requested the best ten results, then the evaluation decreases the number of results to a maximum of ten results or in case too few results were found, then would restart a further search by updating the search context and/or search objectives and find more results based on the updated search context and/or search objectives.

In some embodiments, evaluation of search results is accomplished by computation of a richness / coverage score, which may be based on rules or a machine learning model. Such machine learning model can be trained on (a database of) historical search result data, thereby enabling to detect an optimal heterogeneity or diversity of the search results. For determining the richness / coverage score, historical data on the satisfaction of users in view of the provision of search results in response to certain search requests can be considered. When the richness / coverage score is high enough, e.g. above a threshold, the search process may then be determined to be completed such that the search results can be returned, but when the richness / coverage score is not high enough, e.g. below a threshold, the search process may then be determined to be not completed such that a further search iteration is initiated.

In some embodiments, the profiling engine 24 may include a machine learning system which can be effective in an offline and/or online (live) manner. For example, the machine learning system can (offline) provide trained models to other components of the search system, such as the decision module and/or the databases, which can use the trained models during a search process, the machine learning system can (online/live) share current data with other components, e.g. for (fine-)tuning respective processes or operations, the machine learning system can (online/live) use current data, such as e.g. search results, determination results, etc., to train models, update (trained) models, etc., or the like.

In some embodiments, the machine learning system can be utilized to analyze search parameters in the search request, defined database requests to retrieve data from the databases 30 and search results retrieved from the databases 30. The machine learning system may include a number of machine learning models such as a (deep) neural network which may have been trained beforehand based on historical search data. In some embodiments, the machine learning system may include or apply one or more machine learning approaches. As an example, the profiling engine may include or apply a clustering machine learning approach for deriving a search context based on the search parameters in the search request. The clustering machine learning approach can be trained on (a database of) historical search data, either labelled or un-labelled (in which case unsupervised learning can be used, based on the search parameters). Parameters of any machine learning model/approach may be limited to anonymous parameters/criteria or include personalization elements, i.e. personalized or customized parameters/criteria depending on the use case. In production, the machine learning system is fed with the aforementioned input data (search parameters, defined database requests, retrieved search results) and outputs an initial search context (for the first search iteration) or an updated search context (for subsequent search iterations) to the decision module 22, and the decision module 22 may use such information/data to take a decision (determination) about a further search iteration and/or prepare updated search objectives. After the search process is concluded, the profiling engine 24 may use the collected data, e.g. including at least a subset of the first and second search results, to further train the machine learning models.

In some embodiments, the search objectives for the next search iteration are defined, in view of the updated search context so as to optimize or advantageously refine the further search process. To this end, the search objectives for the next search iteration should be linked to the current evaluation of the search results from the previous search iteration. This can be achieved by specifically focusing on parameters or attributes which are not properly or sufficiently reflected in the current search results. For example, when then evaluation of the current search results with respect to a specific search parameter leads to a low evaluation score, the search objectives for the next iteration can be defined such that the specific search parameter (as search objective) has higher priority or importance in the next search iteration, thus (trying to) increase the score of the search results of the next search iteration with respect to the specific search parameter. This can be accomplished by a gradient-related method.

Based on the search context and evaluation, the decision module 22 may determine one or more search objectives for a given search iteration of the search process to fulfill the search request by the client 10. The search objective(s) may comprise additional or different parameters (i.e. parameters in addition to the search parameters included in the search request) that are e.g. typically used with the provided search parameters and/or the current search context. Rules may be employed by the decision module 22 which stem from historical data or training data, e.g. previous searches that were commonly used along with the given parameters together in the request or small deviations from the parameters to increase the result set of possible limited database results or even background information. The decision module 22 may define one or more requests for retrieving search results in order to perform a current search iteration according to the search context and search objective(s). These defined requests may also be provided to the profiling engine 24 in order to update the search context for a potential further search iteration.

In some embodiments, also the decision module 22 may utilize machine learning technology, i.e. in order to derive the search objective(s) in form of any database retrieval parameters on the basis of the search context provided by the profiling engine 24 and the search parameters in the search request.

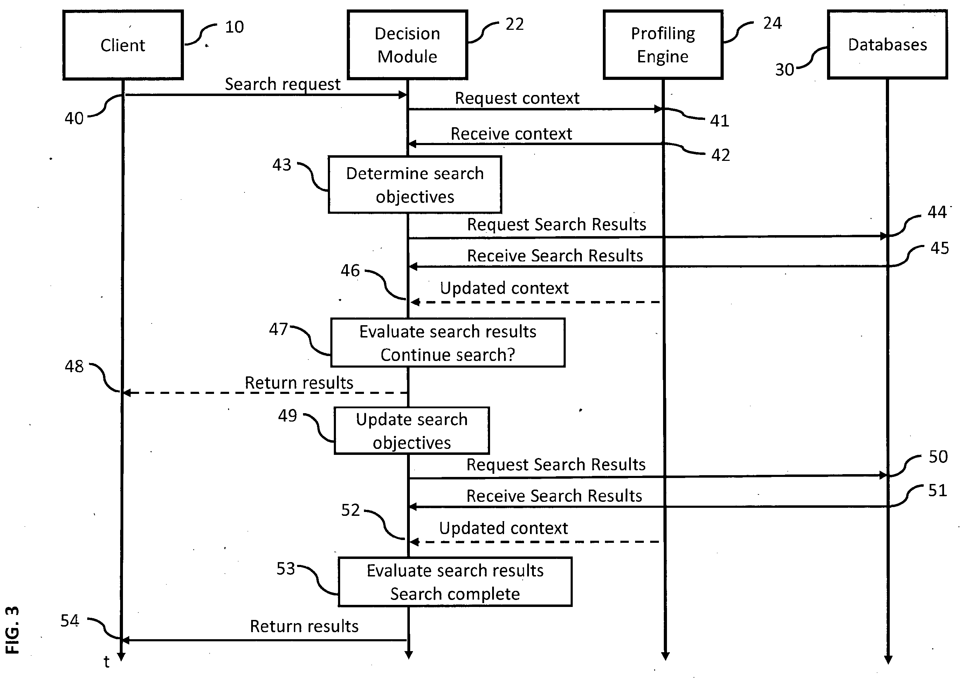

FIG. 3 visualizes the present methodologies by way of an exemplary message sequence chart. Starting at 40, the client 10 sends a search request for search results to the decision module 22. The search request includes one or more search parameters and optionally values, etc. Particular examples are given further below. The search request including the search parameters is received and analyzed by the decision module 22 to determine an initial search context facilitating a first search iteration.

In some embodiments, the initial search context is given by search meta information derived from one or more of the search parameters included in the search request. Such search meta information may indicate any background requirement or side condition of the search which is not explicitly indicated by the search request, but may be derivable from the search parameters in the search request as well as other circumstances such as the time of the day of reception of the search request or the originator of the search request. As mentioned further below, an example of a search context is the recognition that a network routing request relates to a planned data backup to a data center. A further example of a search context is that a travel request for two adults and two children over Christmas (= search parameters) relates to a family holiday. The search context facilitates to direct the search iterations to such search results which particularly fit to the background or intention of the search request.

The decision module 22 determines an initial search context. In this regard, the decision module 22 provides the search parameters included in the search request to the profiling engine 24, at 41, to enable the profiling engine 24 to determine the initial search context. The profiling engine 24 determines the initial search context e.g. by utilizing machine learning mechanisms. As explained further above, the profiling engine 24 may use trained machine learning models such as one or more (deep) neural networks and optionally rules to derive a search context from the provided search parameters. The profiling engine 24 transmits at 42 the initial search context back to the decision module 22.

Based on the received search context and the search parameters included in the search request, the decision module 22 determines the search objectives at 43. Typically, the search objectives are used in the first search iteration in order to direct the first search iteration specifically to one or more of the search parameters. For example, the initial search context provided by the profiling engine 24 may indicate that one of the search parameters is to be prioritized over the other search parameters. Hence, the search objectives e.g. omit the low-priorities search parameters, render the low-priority search parameters less specific, or render the high-priority search parameters more specific. From a technical-functional point of view, the search objectives form a part of the search context as they are derived from the search context and constitute additional, refined, amended search parameters (in addition to the search parameters included in the search request) corresponding to the search context.

The search objectives may also manifest, themselves in one or more additional or different search parameters which were not included in the search request. Generally speaking, the set of these amended/additional search parameters may form the search objectives for the current search iteration and may be indicated in any request to be directed to the databases 30. For example, the search objectives may include search results attributes like, type, memory size or anything else related to the content of sought search results going beyond the search parameters included in the search request. For example, the profiling engine 24 may have determined that the search context of a network routing request (= search request) is a voluminous data backup to a data center. In addition to any search parameter indicated in the network routing request, the search objectives determined for the first search iteration may specify that network routes with a maximum bandwidth are to be retrieved in order to perform the backup in a speedy manner.

Next, at 44, the decision module 22 initiates a database search by requesting search results from (i.e. sending search result request(s) to) at least one database 30 on the basis of the search parameters and the search context including the search objectives. That is, the decision module 22 issues a search result request at 44 to one or more of the databases 30. The databases 30 may be requested in parallel or in sequence. At 45, the databases 30 respond with search results according to the search result request(s) at 44.

The profiling engine 24 monitors or is otherwise informed about the information included in the search result request(s) at 44 (in particular the search parameters indicated in the search result request(s)) as well as the received search results at 45. This information is utilized by the profiling engine 24 to update the search context and provide the updated search context to the decision module 22 at 46. Thus, the decision module 22 determines the updated search context. In some embodiments, the updated search context is given by search meta information derived from one or more of the search parameters included in the search request.

Updating the search context is generally performed in a similar manner as determining the initial search context as described above and by way of specific examples below. In addition to determining the initial search context, updating the search context also considers the retrieved first search results. To this end, the profiling engine 24 e.g. compares the retrieved search results in the present search iteration against the present search context (and optionally the search parameters in the search request) and determines whether and to which extent the presently identified search results sufficiently fulfill the search parameters in the search request and the current search context.

At 47, the decision module 22 evaluates the first search results, e.g. using machine learning mechanisms and/or predefined rules. The evaluation at 47 either results in a determination that the search process is completed or to a determination of an incomplete search process which then results in a further search iteration. In the first-mentioned case of a complete search process, the decision module 22 returns a number of the search results collected in the previous search iteration(s) to the requesting client 10 at 48. Otherwise, the decision module 22 determines an updated, typically refined, broadened search context in order to perform a further search iteration.

In some embodiments, the evaluation at 47 may be based, at least partly, on the updated search context, as provided at 46. In some embodiments, the evaluation at 47 may not take into account the updated search context, and in such case the search context may be updated and provided only during or after the evaluation at 47. Accordingly, the sequence of the operations at 46 and 47 in FIG. 3 is only an example.

The decision to continue or discontinue the present search process is taken based on a one or more completion condition(s). Various criteria for the completion condition are envisaged and may be individually applied for each search process and even be varied at the level of search iterations. In some embodiments, the at least one completion condition includes at least one of a processing time, resource usage/need, memory usage/need, a maximum number of database results, some quality property of the first and second search results, and one or more search criteria fulfilled by at least a subset of the first and second search results. The processing time refers to the overall processing time of the search process from reception of the search request at 40 to the time of returning the search results to the client 10 and, thus, corresponds to the response time from the perspective of the client. Hence, if the present search iteration has exhausted a processing time threshold, the search process is discontinued. The maximum number of search results refers to a threshold for the number of search results e.g. to be returned to the client 10. If the previous search iteration(s) has/have not yet collected a number of search results meeting this threshold, the search process may still be continued. In some embodiments, the one or more search criteria of the completion condition indicate that a parameter value of the first and second search results corresponds to one of the search parameters included in the search request. In some embodiments, the one or more search criteria of the completion condition indicate a degree of variation of parameter values in the first and second search results, denoting to which extent the previously retrieved search results are of heterogeneous nature.

When at least one completion condition is reached, the decision module 22 terminates the search process and sends at least a subset of the gathered search results back to the client 10. A combination of multiple individual completion conditions may be considered. For example, in some embodiments, the completion condition may be given a score that is determined by assigning weights to individual completion conditions and combining the level of fulfillment of all weighted completion conditions to an aggregated completion score. If the completion score is above a certain threshold, this marks the search process as completed. If the completion score is below the certain threshold, the search process is continued and a next search iteration is triggered.

The evaluation of the first search results at 47, in order to make the completion decision, is performed without any additional input or feedback from the client 10 and may, in some embodiments, utilize machine learning technology such as a machine learning model. On the other hand, the profiling engine 24 may use a trained model to evaluate the search results and decide, based on the at least one completion condition, whether the search may be improved or the first search results have already reached their maximum potential. The update of the search context is determined by evaluation model and rules that are stored in the profiling engine 24.

In the event that the search process is determined to be completed, e.g. sufficient number of search results found, or a search time limit is reached, or any other completion condition is reached, the decision module 22 decides to return the (at least a subset of the) found first search results back to the client 10 at 48. In the event that the search is not determined to be completed, e.g. none of the completion conditions is yet reached, the decision module 22 updates the search objectives for the next search iteration at 49, e.g. with a broader range of parameter values, with an extra database search, or additional input parameters. In some embodiments, the decision module 22 may decide to return the (at least a subset of the) found first search results back to the client 10 even in the event that the search is not determined to be completed, e.g. none of the completion conditions is yet reached. In such case, the search is continued, i.e. operations 49 onwards are performed, without any intermediate interaction with the client 10, e.g. without any additional input or feedback from the client 10.

In some embodiments, the evaluation of the first search results at 47 may indicate that the first search results do not comply with a predetermined returning condition, e.g. that the number of the first search results is smaller (or larger) than a number, of search results to be returned to the client 10, the first search results are not appropriate, suitable or otherwise undesired for being returned to the client 10, or the like. This provides assistance to the decision module 22 to derive new search objective(s) for the second search iteration. For example, the decision module 22 decides to vary at least one of the search parameters, e.g. in order to broaden the search process in the second search iteration or shift the scope of the search in the second search iteration, and thus to determine a number of second search results based on the at least one varied search parameter and the updated search context. As mentioned above, logically, the varied search parameter may be considered to form a part of the updated search context.

After a second search iteration is initiated, at 50, based on the updated search context including the updated search objectives for the second search iteration, the decision module 22 receives the second search results at 51. As before, the profiling engine 24 monitors or is otherwise informed about the information included in the search result request(s) at 50 as well as the received search results at 51 in order to again update the search context based on this information at 52. Search context update at 52 is performed in the same manner as before at 47. Similarly, the sequence of the operations at 52 and 52 in FIG. 3 is only an example.

Likewise, the decision module 22 evaluates the second search results, which may must does not need to be based on the updated search context, against the at least one completion condition and, in the visualized example, determines, at 53, that the search process is now complete. For example, the decision module 22 may determine that the search processing time is over and the client 10 now expects to receive the search results. Alternatively or additionally, the decision module 22 may determine that the search results composed of the first search results received in the first search iteration (at 45) and the second search results received in the second search iteration (at 51) are sufficiently heterogenous and thus represent a certain range of search results corresponding to the search parameters in the search request at 40. In the alternative, the evaluation at 53 may also yield that the search process is not yet complete and the decision module 22 may thus decide to still perform a further third search iteration in the same manner as described before. In the example of FIG. 3, however, the search process is decided to be terminated and at least a subset of the (first and/or second) search results collected or computed in the first and/or second search iterations are returned to the client 10 at 54.

Note that the visualized example of FIG. 3 exemplarily comprises two search iterations, the first search iteration comprising operations 41 to 47 and the second search iteration comprising operations 49 to 53. In each of the search operations, the databases 30 are involved once, respectively.

Note that the distribution of the functionalities of the computation engine 20 according to the implementation of FIG. 3 is of exemplary character. In other examples, the computation engine 20 may be realized by a monolithic architecture of software and/or hardware. In still other examples, the computation engine 20 may be realized by a different, e.g. more fine-grained distribution of the functionalities.

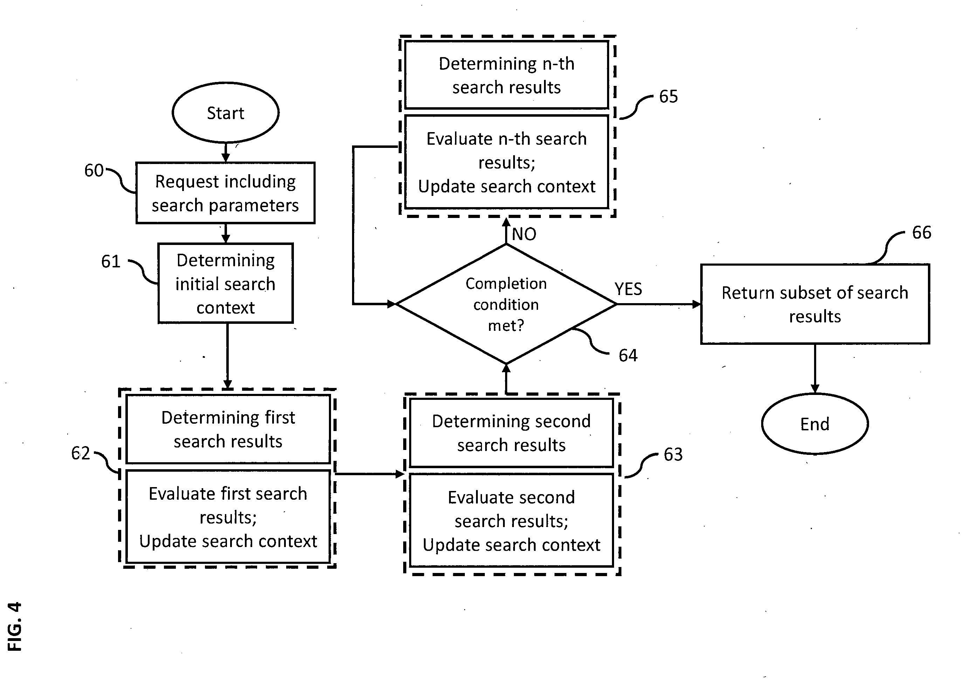

FIG. 4 shows an example of an overall iterative search process by way of a flow diagram with n iterations, n being 2 or more. Similar as before, the process starts with a search request including search parameters at 60, wherein the search parameters are set by the client 10.

Next, at 61, the search request is processed by the computation engine 20. The computation engine 20 determines an initial search context for first search results that are to be identified as described above with reference to FIG. 3.

The next block 62 of the flow diagram represents a first search iteration performed by the computation engine 20 and the databases 30. The databases 30 return the first search results and then the first search results are evaluated by the computation engine 20. The search context may be updated with or by additional information as described above. Thereby, the first search results may also be filtered, e.g. a number of the first search results may be assessed to be incompatible with the updated search context and are discarded by the computation engine 20.

The computation engine 20 then decides to perform at least a second search iteration which is represented by block 63. The second search results are determined based on the updated search context of the first iteration block 62. After retrieving the second search results, the second search results are evaluated, the search context may again be updated and the second search results (and possibly also the first search results- still available from the first search iteration) are potentially again filtered based on the updated search context.

After the evaluation of the second search results, it is checked by the computation engine 20, visualized by branching 64, whether any completion condition is reached, e.g. the available processing time is not reached yet. In case the completion condition is reached, at least a subset of the hitherto retrieved search results is sent back to the client 10 or in case, the completion condition is not reached, a further search iteration is initiated at 65 based on the updated search context.

This iterative search process may continue for n further iterations until at least one completion condition is reached. Block 65 represents the n-th iteration, wherein the n-th search results are determined based on the previously updated search context. After another evaluation of the search results, the completion condition is checked again and if the completion condition is still not reached, the computation engine 20 performs one or more additional search iterations based on further updated search contexts until at least one of the completion conditions is reached. Hence, generally, the iterative search process loops until at least one of the potentially multiple completion conditions is reached.

As described above, the computation engine 20 or the decision module 22 and/or the profiling engine 24 may realize various functionalities. For example, such functionalities may include one or more of updating (e.g. refining) the search context, evaluating the search results, e.g. including identifying any shortcomings of intermediate search results, and determining any new search objectives.

In various embodiments, such functionalities may be realized with various inputs, various analyses and/or various outputs. The input or inputs may e.g. include a user/client profile, results of preceding search/es, system characteristics, or the like. The analysis or analyses may e.g. include a conversion from user/client needs or preferences into a search result set, a consideration of one or more key performance indicators (KPI) relevant for the search process, such as e.g. response limit time, processor load, etc., identification and potential insertion, query or inference of missing (relevant or useful) elements or parameters for the search process, or the like. The output or outputs may e.g. include an updated search context applicable for a subsequent search by/for the user/client, a recommendation regarding handling (such as e.g. an advice in terms of the relevance, suitability, etc.) of the returned search results, a (system-internal) instruction for adapting processes of/at other parts of the system, or the like.

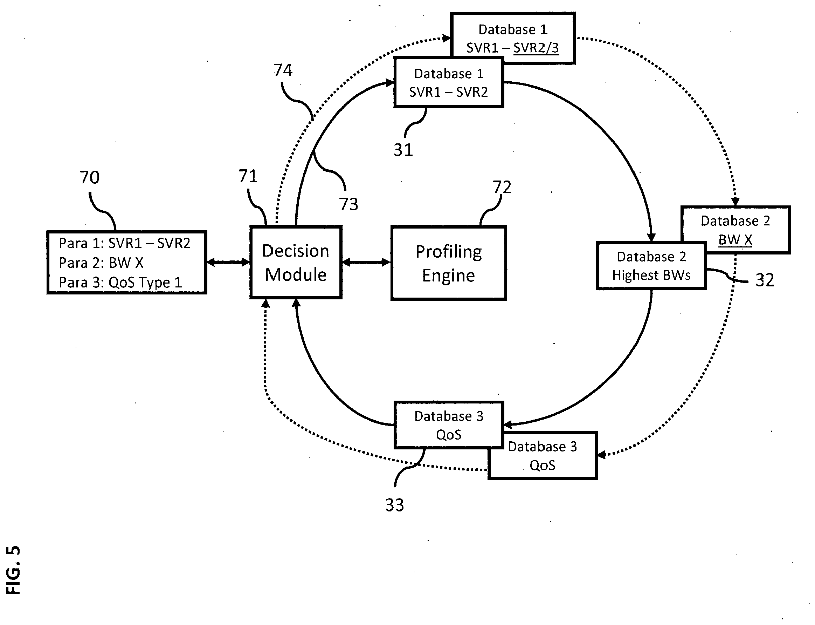

FIG. 5 illustrates an example of the dynamic iterative search process. The search request 70 is e.g. a network routing request and exemplarily includes three search parameters. Parameter 1 defines a starting location and end location for the route to be identified, i.e., the starting node SRV1 and end node SRV2 in a network. Parameter 2 specifies a requirement for the network route such as a certain minimum bandwidth (BW X), and parameter 3 may define a quality of service (QoS) priority or type, such as secure transmission, high throughput, smallest cost, etc.

The search request 70 with these search parameters is received by the decision module 22 at 71. The decision module 22 forwards the search parameters to the profiling engine 24, and the profiling engine determines, at 72, a search context based of the search parameters. For example, the profiling engine 24 may recognize from the search parameters "BW X" and "QoS Type 1" that the search request actually relates to a backup process sought by the client 10, i.e. the requested network route from SRV1 to SRV2 serves the purpose of a backup of a higher volume of data. This search context determined by the profiling engine 24 is returned to the decision module 22. The decision module 22 then specifies a search objective based on the data backup search context for the first iteration, namely to identify at least 10 network routes with the highest bandwidth in order to allow for a relatively quick backup.

Afterwards, the decision module 22 initiates a first search iteration at 73. As visualized by the solid black line 73 in FIG. 5, the first search iteration may include contacting the first database 31 e.g. to first determine a number of network routes from SRV1 to SRV2 without consideration of any bandwidth or currently available QoS. This information may be rather static as the network routes between servers in the network are specified by the network topology. On top of this, the decision module 22 also contacts the second database 32 in order to determine bandwidths of any network legs or hops forming the network routes retrieved from the first database 31. Also, this information may be generally static and not yet reflect any current load, outages of network hops, etc. Current QoS information relating to current network loads etc. of the network routes as well as additional information (such as costs, times of availability of the highest bandwidths) is e.g. retrieved from the third database 33.

The identified search results (e.g. 10 network routes) are then evaluated and filtered by the decision module 22. As described above, the decision module 22 provides information defining the retrieval of the 10 network routes from the three databases 31, 32, 33 as well as the identified network routes to the profiling engine 24 for analysis and updating the search context. For example, the profiling engine 24 recognizes that the majority of the 10 network routes will only be available with their high bandwidths in farther future while the search request implies that early backup availabilities should be offered as well. Hence, the profiling engine 24 updates the search context to indicate timely backup and provides this updated search context to the decision module 22.

Based on the updated search context, the decision module 22 filters a number of search results, i.e. some of the network routes are disregarded because they comply with the search request requirements only in farther future. Thus, e.g. only 5 of the 10 search results may remain, and the decision module 22 decides to continue the search with a refined search based on the updated search context received from the profiling engine 24. The decision module 22 may determine that the completion condition for the present search process, e.g. at least 10 network routes with sufficient and timely available bandwidth, is not yet reached. The decision module 22 updates the search objective in accordance with the updated search context calling for a timely bandwidth available. The main search objective for the second search iteration is thus to identify network routes having a minimum bandwidth X that is available within e.g. the next 3 hours.

In order to avoid identifying an insufficient number of search results in the second iteration, the decision module 22 may also broaden other search parameters, even beyond search parameters indicated in the original search request 70. For example, although the data backup target is specified as SVR2 in the search request 70, the profiling engine 24 may additionally request network routes to an alternative target node SVR3 in the second search iteration.

The decision module 22 then, without intermediate interaction with the client 10, initiates the second search iteration at 74 (marked by the dotted line in FIG. 5), by utilizing the aforementioned database request parameters in according with the updated search objectives. Again, the first, second and third database 31, 32, 33 are contacted and further network routes matching the database request parameters are retrieved. Likewise, the profiling engine 24 may update the search context based on the database request parameters and the retrieved further network routes. The decision module 22 then determines that the completion condition is reached and takes the decision to return the 10 best fitting network routes back to the client as opposed to conducting still a third search iteration.

Typically, the returned search results include a number of search results determined in the first search iteration (e.g. the aforementioned 5 network routes which were not filtered out in the evaluation of the first iteration results) as well as a number of search results determined in the second search iteration (e.g. 5 of the additional network routes identified in the second iteration including e.g. 2 network routes to SVR3). Thus, the set of returned search results constitutes a collection or aggregation of search results identified and computed over multiple search iterations. Due to the lack of intermediate contact with the client 10, the client 10 is unaware that and how many search iterations have been performed by the computation engine 20 in order to determine the returned search results. Hence, the present methodologies can be implemented without technical impact on or necessity to adapt the interface or protocols between the client 10 and the computation engine 20.

A further non-limiting example may relate to a travel search. For example, the search request requests a number of travel offers for two adults and two children from Nice to New York from 12 December to 3 January. The decision module 22 receives the search request and forwards the search parameters to the profiling engine 24. The profiling engine 24 determines from the search parameters, in particular from the indicated passengers, but potentially also from the travel destination and the travel time, that the search context is a family travel. As noted above, the search context may be derived from a clustering machine learning approach which has been trained on an airline database of historic bookings, either labelled (e.g. via customer surveys requesting the trip type) or un-labelled (in which case unsupervised,learning can be used, based on the search parameters, booking prices etc.), wherein parameters of the model/approach may be limited to anonymous parameters/criteria or include personalization elements (passenger history, loyalty data..). The search context "family" is provided back to the decision module 22.

The decision module 22 then specifies, based on the search parameters and the search context, a travel offer request (including corresponding search objectives) to be directed to one or more travel offer platforms (= databases 30) including a pricing platform (e.g. database 33). The travel offer request may indicate that 400 travel offers are sought which strictly correspond to the search parameters and are eligible for families (search objectives for the first search iteration). The travel offer platforms and pricing platform then return 300 travel offers to the decision module 22. The profiling engine 24 monitors the travel offer request and the 300 travel offers. Analysis of these data by the profiling engine 24 yields that many of the 300 travel offers bears an intermediate stop (e.g. in Paris or London) with a connecting time of more than two hours, which is assessed to be inconsistent with the family search context of the search. Based thereon, the search context is updated. The updated search context then indicates a minimal number of stops as well as a connection time between one and two hours.

The decision module 22 then determines whether or not to continue the search process by comparing the intermediate result, given by the retrieved number of first search results (the 300 initial travel offers) and the updated search context, against any completion conditions. In the present example, the completion conditions may prescribe that at least 400 travel offers sufficiently matching the search request are to be returned. Hence, as only 300 travel offers have been identified and thus the completion condition is not yet reached, the decision module 22 initiates a second search iteration. As refined travel offer request parameters (search objectives for the second search iteration), the decision module 22 asks the databases 30 to provide 400 travel offers (including or replacing some of the 300 previous travel offers) with non-stop flights and/or a one-stop flight with a connecting time between one and two hours.

The second search iteration then yields e.g. 100 new travel offers which have not yet determined in the first search iteration. The same evaluation and search context update process is performed by the profiling engine 24 and the decision module 22 as at the end of the first search iteration. For example, the profiling engine 24 may determine that a portion of the now 400 identified travel offers, e.g. 50 travel offers, have a price which is typically too high for a family travel. The profiling engine 24 thus updates the search context to specifically relate to price-sensitive travel offers. The updated search context and also the evaluation result of the 50 travel offers being too expensive is provided to the decision module 22.

Based on the analysis of the profiling engine 24, the decision module 22 discards the 50 travel offers being too high-priced and decides to still perform a third search iteration. The search objectives for the third search iteration include an upper price limitation which is indicated in the travel offer request to the offer platforms and pricing platform. As refined travel offer request parameters (search objectives for the third search iteration), the decision module 22 asks the databases 30 to provide 50 travel offers (including or replacing some of the 50 previous travel offers) complying with the upper price limitation.

The third search iteration determines the remaining 50 travel offers. Evaluation and analysis of the profiling engine 24 and the decision module 22 show that the 400 identified search results sufficiently meet the search request and the 400 travel offers are returned to the requesting client.

As described above, various inputs, various analyses and/or various outputs may be applicable for various functionalities of the computation engine 20 or the decision module 22 and/or the profiling engine 24. This applies for any application, use case, purpose or scenario of a search process, while the inputs, analyses and/or outputs may differ for different applications, use cases, purposes or scenarios.

With regard to the aforementioned travel search example, some (illustrative but non-limiting) examples of conceivable inputs, analyses and/or outputs of/for the computation engine 20 or the decision module 22 and/or the profiling engine 24 may be as follows. Note that these examples are merely given for facilitating a better understanding, without limiting embodiments of the invention.

As or for input or inputs, for example, it is possible to retrieve a customer profile, to retrieve past data to identify a potential scope of recommendation or offer, to get enriched data from an internal or external system during the search, to get enriched identification up to the exact customer and past booking/s (of that customer) when possible, to refine the position of the customer request in the search funnel (e.g. in view of factor such as, whether or not the customer request is an inspiration search, chance (such as the percentage or likelihood) to go to a booking right now, i.e. with the present search results, etc.), to get already computed recommendations or offers (within the current search iteration), or the like.

As or for analysis or analyses, for example, it is possible to convert profile/customer needs or preferences into an offer profile or offer set (all offers to be proposed) structure (which may include or indicate e.g. a level of price, a level of service, a usual number of connections, a usual connecting time, a usual operating carrier, etc.), to review operational KPIs of the search (such as e.g. response time limit, CPU consumption limit, etc.), to review a proposed offer or recommendation on various parameters (such as e.g. a variety of prices (around the customer expectation), a variety of itineraries (matching key criteria of customer expectation), a variety of level of service (around the customer expectation), a matching with a customer profile, or the like), to identify if/when offers or recommendations comply with an identified profiling (e.g. a result of/from the profiling engine 24), to identify if/when offers or recommendations correspond to a usual scope of offer or recommendation for a given customer profile, to identify if/when offers or recommendations contain a usual service/s booked by the customer, to identify if/when a profile of offers or recommendations (such as e.g. airport, connecting time, services, etc.) correspond to a usual customer profile booking, to identify missing element/s in an offer or recommendation panel (such as e.g. timing, carrier, level of service, specific service, etc.) and to optionally infer/insert the missing element/s, to evaluate or rank offers or recommendations based on one or more of the above parameters or issued, or the like.

As or for output or outputs, for example, it is possible to update a (shared) search context for next search iterations or processed (i.e. functional and non-functional criteria, which may e.g. include one or more of search scope (e.g. origin/destination, dates, etc.), search objectives (e.g. ask for a larger variety on itineraries, ask for a larger variety on level of services, ask for a cheapest offer or recommendation), customer profiling (e.g. from a generic customer profile in the first search iteration to a more specific customer profile in the subsequent search iteration/s), [non-functional] operational limits (such as e.g. response time, CPU, number of recommendation, etc.), to provide a recommendation to remove or to refine proposed offer(s), to provide new customer profile information for subsequent search iterations, to provide a recommendation to add a new offer with specific characteristics (e.g. toward offer set richness), to provide a recommendation to mix content from received offers in order to create new more adapted offers, to provide a recommendation to add new offers while using specific search options (e.g. change origin airport with existing product feature or change transportation type such as train, car, etc.), to provide a recommendation to some modules (e.g. search components) to adjust their own behaviour using specific parameters or information/data (such as e.g. offer pricing to adjust a willingness to pay, e.g. to adjust a corresponding parameter, for the future), or the like.

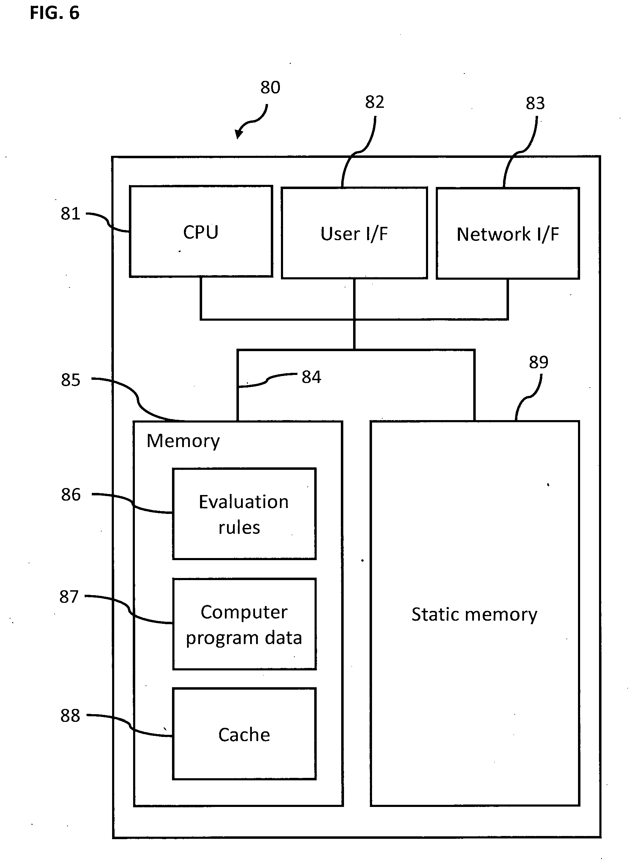

FIG. 6 is a diagrammatic representation of the internal components of a computing machine 80 implementing the functionality of the computation engine 20 or e.g. the decision module 22 and/or the profiling engine 24. Similar servers may also realize one or more clients 10 in parallel described further above. The computing machine 80 includes a set of instructions to cause the computation engine 20 to perform any of the methodologies discussed herein when executed. The computing machine 80 includes at least one processor 81, a main memory 85 and a network interface device 83 which communicate with each other via a bus 84. Optionally, the computing machine 80 may further include a static memory 89 and a disk-drive unit. A video display, an alpha-numeric input device and a cursor control device may be provided as examples of user interface 82. The network interface device 83 connects the computing machine 80 e.g. implementing the computation engine to the other components of the search system 1 such as the client 10 and the databases 30 or any further components.

The computing machine 80 includes a memory 85 such as main memory, random access memory (RAM) and/or any further volatile memory. The main memory 85 may store temporary program data to facilitate the functionality of the computation engine 20. For example, the computation module 4 may maintain already transformed and calculated access right controls to speed up the calculation process by being readily available in the cache 88. The main memory 85 may also store computer program data 87 that are needed for the new access rights calculation. The memory 85 may also temporarily store search results retrieved by the computation engine 20.

A set of computer-executable instructions (computer program code 87) embodying any one, or all, of the methodologies described herein, resides completely, or at least partially, in or on a machine-readable storage medium, e.g., the memory 85. For example, the instructions 87 may include software processes implementing the search request processing functionality of the computation engine 20. The instructions 87 may also implement the functionality of receiving and responding to search requests from the client 10, to evaluate retrieved search results and to take decisions about completion or continuation of the search process.

The instructions 87 may further be transmitted or received as a propagated signal via the Internet through the network interface device 83 or via the user interface 82. Communication within computing machine is performed via a bus 84. Basic operation of the computation engine 20 is controlled by an operating system which is also located in the memory 85, the at least one processor 81 and/or the static memory 89.

In general, the routines executed to implement the embodiments, whether implemented as part of an operating system or a specific application, component, program, object, module or sequence of instructions, or even a subset thereof, may be referred to herein as "computer program code" or simply "program code". Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the applicant's general inventive concept.

## Claims

1. A computer-implemented method for determining search results in a search system, the method comprising:
in response to receiving a search request including search parameters, determining an initial search context based on the search parameters;
in a first search iteration, determining a number of first search results based on the search parameters and the initial search context;
evaluating the number of first search results and determining, based on the evaluation, an updated search context;
determining that at least one completion condition is not reached;
in a second search iteration, determining a number of second search results based on the search parameters and the updated search context;
in response to determining that the at least one completion condition is reached, returning at least a subset of the first and second search results.

2. The method of claim 1, wherein determining that at least one completion condition is not reached is based on the updated search context and/or the number of first search results.

3. The method of claim 1 or 2, further comprising performing one or more further search iterations based on still updated search contexts as long as the at least one completion condition is not reached.

4. The method of claim 3, wherein a subsequent search iteration is based on search results of at least one previous search iteration.

5. The method of any one of claims 1 to 4, wherein any one of the initial search context and the updated search context indicates search meta information derived from one or more of the search parameters included in the search request.

6. The method of any one of claims 1 to 5, wherein the completion condition is at least one of a search processing time, a maximum number of search results, and one or more search criteria fulfilled by at least a subset of the first and second search results.

7. The method of claim 6, wherein the one or more search criteria indicate that a parameter value of the first and second search results corresponds to one of the search parameters included in the search request.

8. The method of claim 6 or 7, wherein the one or more search criteria indicate a degree of variation of parameter values in the first and second search results.

9. The method of any one of claims 1 to 8, wherein evaluating the first search results indicates that the first search results do not comply with a predetermined returning condition, and determining the updated search context includes varying at least one of the search parameters and/or determining the number of second search results based on the at least one varied search parameter and the updated search context.

10. The method of claim 9, wherein the predetermined returning condition comprises a number of search results to be returned, and evaluating the first search results indicates that the number of the first search results is smaller than the number of search results to be returned.

11. The method of any one claims 1 to 10, wherein evaluating the first search results and the second search results utilizes a machine learning model.

12. A search system for determining search results comprising a processor and a memory with instructions, the system being arranged to:
in response to receiving a search request including search parameters, determine an initial search context based on the search parameters;
in a first search iteration, determine a number of first search results based on the search parameters and the initial search context;
evaluate the number of first search results and determine, based on the evaluation, an updated search context;
determine that at least one completion condition is not reached;
in a second search iteration, determine a number of second search results based on the search parameters and the updated search context;
in response to determining that the at least one completion condition is reached, return at least a subset of the first and second search results.

13. The search system of claim 12, further arranged to perform the method of any one of claims 2 to 11.

14. A computer program with instructions which, when executed by at least one processor, implement the method of any one of claims 1 to 11.

15. A computer-readable storage medium storing program instructions, which, when executed by at least one processor, implement the method of any one of claims 1 to 11.
